# EUROPEAN PATENT APPLICATION

(11) **EP 4 170 485 A1**
(43) Date of publication of application: **26.04.2023**
(21) Application number: 21828372.9
(22) Date of filing: 22.06.2021
(51) Int. Cl.: G06F 9/06

(54) **DISASTER RECOVERY METHOD AND APPARATUS FOR MIDDLEWARE OF PAAS, DISASTER RECOVERY DEVICE, AND COMPUTER-READABLE STORAGE MEDIUM**

(30) Priority: 24.06.2020 CN 202010587834
(71) Applicant: ZTE Corporation, Shenzhen, Guangdong 518057 (CN)
(72) Inventor: TIAN, Yi, Shenzhen, Guangdong 518057 (CN); LIU, Xuesheng, Shenzhen, Guangdong 518057 (CN); LI, Xiaojin, Shenzhen, Guangdong 518057 (CN); CHEN, Jian, Shenzhen, Guangdong 518057 (CN)
(74) Representative: Canzler & Bergmeier Patentanwälte Partnerschaft mbB
(86) International application number: PCT/CN2021/101599
(87) International publication number: WO 2021/259281

(57) **Abstract**

The present application relates to the field of communication and information technology, and provides a disaster tolerance method and apparatus for middleware of PaaS, a disaster tolerance device, and a computer-readable storage medium. The disaster tolerance method for middleware of PaaS includes: determining a first site as a first primary site, and connecting the first site to a second site in response to detecting that a middleware type of the first site and a number of entity objects of the middleware type of the first site are consistent with a middleware type of the second site and a number of entity objects of the middleware type of the second site, and versions of the middleware type of the first site and the middleware type of the second site are compatible or consistent with each other, with the second site being a standby site; configuring disaster tolerance parameters for the entity objects of at least one middleware type of the first site and the second site, respectively, with the disaster tolerance parameters including a priority of quality of service (QoS) and a communication address; generating a first synchronization policy according to the disaster tolerance parameters; and synchronizing, according to the first synchronization policy, data of the entity objects of the middleware type of the first site to the entity objects of the middleware type of the second site.

## Description

The present application claims priority from the Chinese patent application No. 202010587834.2 filed with the China Patent Office on June 24, 2020, the entire contents of which are incorporated herein by reference.

### TECHNICAL FIELD

Embodiments of the present application relate to, but are not limited to, the field of communication and information technology.

### BACKGROUND

In the 5th Generation Mobile Communication Technology (5G) era, the communication network itself is developing towards a software defined network (SDN)/network function virtualization (NFV). Meanwhile, the management capability of the communication network management system is increasingly extended, and the data volume of various services and management information generated by the network is explosively increased, accordingly, a relatively high availability of the system and a disaster tolerance of the data are particularly important. Distributed, virtualized and Clouded technologies are standard architecture technologies for extending the capability of the system, with various applications being deployed on a virtualized cloud platform as a service (PaaS) in form of micro-services and containers so that capabilities of various middleware public service objects provided by the platform are fully utilized, which has become a specification of a basic architecture of telecommunication 5G for management. Accordingly, the disaster tolerance technology is desired to meet a disaster tolerance under a constraint of such a basic architecture.

### SUMMARY

In an aspect, the present application provides a disaster tolerance method for middleware of virtualized cloud platform as a service (PaaS), including: determining a first site as a first primary site, and connecting the first site to a second site in response to detecting that a middleware type of the first site and a number of entity objects of the middleware type of the first site are consistent with a middleware type of the second site and a number of entity objects of the middleware type of the second site, and versions of the middleware type of the first site and the middleware type of the second site are compatible or consistent with each other, with the second site being a standby site; configuring disaster tolerance parameters for the entity objects of at least one middleware type of the first site and the second site, with the disaster tolerance parameters include a priority of quality of service (QoS) and a communication address; generating a first synchronization policy according to the disaster tolerance parameters; and synchronizing, according to the first synchronization policy, data of the entity objects of the middleware type of the first site to the entity objects of the middleware type of the second site.

In another aspect, the present application provides a disaster tolerance apparatus for middleware of virtualized cloud platform as a service (PaaS), including: an access module, a configuration module, a control module, and a synchronization execution module; where the access module is configured to determine a first site as a first primary site, and connect the first site to a second site in response to detecting that a middleware type of the first site and a number of entity objects of the middleware type of the first site are consistent with a middleware type of the second site and a number of entity objects of the middleware type of the second site, and versions of the middleware type of the first site and the middleware type of the second site are compatible or consistent with each other, with the second site being a standby site; the configuration module is configured to configure disaster tolerance parameters for the entity objects of at least one middleware type of the first site and the second site, the disaster tolerance parameters include a priority of quality of service (QoS) and a communication address; the control module is configured to generate a first synchronization policy according to the disaster tolerance parameters; and the synchronization execution module is configured to synchronize, according to the first synchronization policy, data of the entity objects of the middleware type of the first site to the entity objects of the middleware type of the second site.

In still another aspect, the present application provides a disaster tolerance device, including a processor, a memory and a communication bus, where the communication bus is configured to enable connection and communication between the processor and the memory; and the processor is configured to execute one or more computer programs stored in the memory to implement at least one operation of the disaster tolerance method for middleware of PaaS according to the present application.

In yet another aspect, the present application provides a computer-readable storage medium storing one or more computer programs thereon, where the one or more computer programs are executable by one or more processors to implement at least one operation of the disaster tolerance method for middleware of PaaS according to the present application.

### BRIEF DESCRIPTION OF DRAWINGS

FIG. 1 is a flowchart of a disaster tolerance method for middleware of PaaS according to the present application.
FIG. 2 is a diagram of displaying of an interface of a disaster tolerance management console according to the present application.
FIG. 3 is a flowchart of a disaster tolerance method for middleware of PaaS according to the present application.
FIG. 4 is a flowchart of a disaster tolerance method for middleware of PaaS according to the present application.
FIG. 5 is a schematic block diagram of a disaster tolerance apparatus for middleware of PaaS according to the present application.
FIG. 6 is a schematic structural diagram of a disaster tolerance device according to the present application.

### DETAIL DESCRIPTION OF EMBODIMENTS

For clarity and better understanding of objects, technical solutions and advantages of the present application, embodiments of the present application will be described in further detail with reference to following specific implementations and accompanying drawings. It will be appreciated that the specific embodiments described herein are merely for illustration of the present application and are not intended to limit the present application.

In the existing art, there is a disaster tolerance scheme for recovering a backup of a PaaS-based service application (APP) and a disaster tolerance scheme for a PaaS-based underlying storage layer. For such two schemes, in the disaster tolerance scheme for recovering the backup of the PaaS-based service application, the service APP is desired to participate in a disaster tolerance throughout a disaster tolerance process, for an advantage of transparent of a white-box being viewable and accessible, which makes influences on a service in a disaster recovery process, and tight coupling between the disaster tolerance and the service is further caused. As a result, a disaster tolerance operation invades into the service APP, and influences running stability and performance indexes of the service APP. Further, the consistency of data in the disaster tolerance process is desired to be ensured by a plurality of service APPs, which brings relatively high service complexity. In the disaster tolerance scheme for the PaaS-based underlying storage layer, a duplication technology of specific commercial disaster tolerance software or a magnetic array hardware brand is desired to be tied, which involves a relatively higher cost.

In order to solve technical problems of tight coupling with the service or additional specific service software or hardware technical platform being desired in a service disaster tolerance, the present application provides a disaster tolerance method for middleware of PaaS, which is described below with reference to the accompanying drawings.

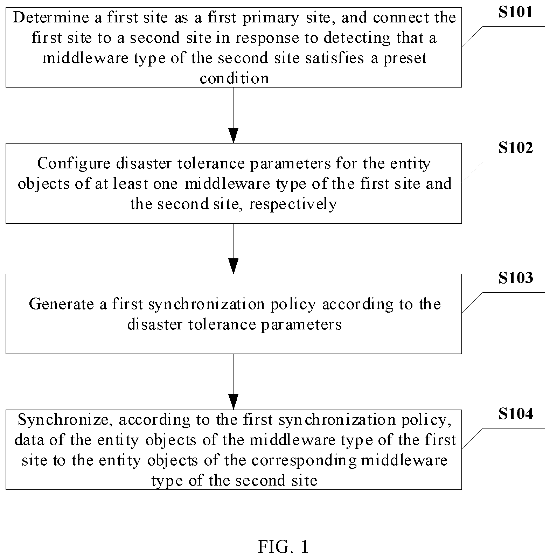

Referring to FIG. 1, a flowchart of a disaster tolerance method for middleware of PaaS according to the present application is shown, and the disaster tolerance method for middleware of PaaS includes operations S101 to S104.

At operation S101, determining a first site as a first primary site, and connecting the first site to a second site in response to detecting that a middleware type of the second site satisfies a preset condition.

In the present application, the first site includes: at least one middleware type, and entity objects of the middleware type. Each middleware type may include 1 to n entity objects, where the number of the entity objects is equal to n, and n is generally a natural number greater than zero. The first site is the first primary site, and the second site is a standby site. The first site serves as a local site, and the second site serves as a remote site. The second site includes a plurality of middleware types, and entity objects of the middleware types, each middleware type may include 1 to m entity objects, where the number of the entity objects is equal to m, and m is generally a natural number greater than zero. The middleware types of the first site and the second site each include at least one of: Posetgre database, ElasticSearch database, FTP service, Redis service, Kafak service, LDAP service, Zookeeper, or PVC shared file. The middleware type of the second site satisfying the preset condition specifically includes a case where the middleware type of the first site and the number of the entity objects of the middleware type of the first site are consistent with the middleware type of the second site and the number of the entity objects of the middleware type of the second site respectively, and versions of the middleware type of the first site and the middleware type of the second site are compatible or consistent with each other.

In an implementation, an operation and maintenance person or user may access an opposite site by inputting an access parameter through an operation interface, and set a role of a site, for example, set the local site as a primary site. Then, information of the preset condition of the opposite site is acquired through an access address of the opposite site, to be compared with information of a system condition of the local site, if the conditions are matched completely, the access is successful; and a primary/standby relationship is established, that is, the first site and the second site are connected.

At operation S102, configuring disaster tolerance parameters for the entity objects of at least one middleware type of the first site and the second site, respectively.

In the present application, the disaster tolerance parameters include: a priority of quality of service (QoS) and a communication address. The communication address is a communication address corresponding to interactive data of each entity object of the first site and/or the second site. The communication address may be a unique identifier (ID) for saving the entity objects of all middleware types contained in the system at the first site. The disaster tolerance parameters may further include at least one of: a synchronization period or a timeout parameter. In an implementation, the operation and maintenance person may select any certain entity object of the first site or the second site on a configuration interface of a disaster tolerance management console displaying the entity objects of the first site and the second site, and configure or view the disaster tolerance parameters.

In the present application, the case where operation S101 is performed before operation S 102 is merely an example for illustration, and in practical applications, the order is not limited, and these operations may be performed simultaneously; or the disaster tolerance parameters may be configured before connecting the first site to the second site.

At operation S103, generating a first synchronization policy according to the disaster tolerance parameters.

In an implementation, the first synchronization policy is generated according to the disaster tolerance parameters, and the preset disaster tolerance parameters includes a priority of QoS and a communication address, the first synchronization policy generated is a data synchronization priority policy for each entity object generated according to the priority of QoS and the communication address corresponding to interactive data of each entity object of the first site and/or the second site, which can ensure that data synchronization is firstly performed on the entity object with a relatively higher priority, and data synchronization for the entity object with a relatively lower priority is delayed in a queue or paused. The synchronization policy includes at least one of: a prioritization order, or an allocation of synchronization channels. The synchronization may be performed through one channel according to priorities from high to low; or the synchronization may be first performed on key service data with a relatively higher priority through an exclusive channel, and statistical service data with a relatively lower priority queues up to share one channel for synchronization or synchronization of the statistical service data with the relatively lower priority may be paused to give up the channel.

In an implementation, in a case where the disaster tolerance parameters configured include a preset priority of QoS, a preset communication address, a preset synchronization period, and a preset timeout parameter, the first synchronization policy generated includes: according to the priority of QoS configured for each entity object, the communication address corresponding to interactive data of each entity object of the first site and/or the second site, and the preset synchronization period, generating, if a middleware entity object (i.e., the entity object of the middleware type) of the first site and a middleware entity object (i.e., the entity object of the middleware type) of the second site are not connected within a preset time in a connection process, a data synchronization priority policy for each entity object, re-connecting the middleware entity object of the first side with the middleware entity object of the second site for a preset number of times, and restarting such middleware entity objects in response to that a preset timeout period is reached but the middleware entity object of the first side and the middleware entity object of the second site are still not connected (i.e., the re-connecting fails), and performing, after the re-connecting is successful (i.e., the middleware entity object of the first site and the middleware entity object of the second site are connected), data synchronization firstly on the entity object with a relatively higher priority according to the preset priority and the preset synchronization period, and delaying data synchronization for the entity object with a relatively lower priority in a queue or pausing the data synchronization for the entity object with the relatively lower priority.

In an implementation, the disaster tolerance method for middleware of PaaS may further include: stopping, in response to detecting that a second preset event occurs, an operation of generating the first synchronization policy according to the disaster tolerance parameters. The second preset event includes at least one of: upgrade of version of at least one middleware type; maintenance and upgrade of the first site; or maintenance and upgrade of the second site. If upgrade of version of a part of middleware types is detected, but both the primary site and the standby site are in a normal state without any maintenance or upgrade, the synchronization policy is generated without the disaster tolerance parameters of such part of middleware types, and is generated according to the disaster tolerance parameters of other middleware types.

In an implementation, before generating the first synchronization policy according to the disaster tolerance parameters, the disaster tolerance method for middleware of PaaS may further include: collecting a relevant state of the entity objects of each middleware type during operating of the entity objects. The relevant state includes at least one of: a hardware operating state desired for operation of the middleware type, or an operating state of the middleware type itself. The hardware operating state desired for operation of the middleware type includes at least one of: a network bandwidth, an occupancy rate of a central processing unit (CPU), a utilization rate of a memory, or utilization rate of an I/O resource. The operation of generating the first synchronization policy according to the disaster tolerance parameters includes: adjusting, according to the relevant state, a priority and/or channel for data synchronization of the entity objects of each middleware type. In an implementation, in a case where the relevant state collected exceeds a preset index, the operation and maintenance person may be informed, via a mail or short message within a preset time, to take intervention, and an abnormal state and a prompt message are displayed on a user interface to guide the operation and maintenance person to resolve a fault according to processing suggestions. The user interface and the configuration interface of the disaster tolerance management console may be a same interface, or may be different interfaces. In a case where the user interface and the configuration interface of the disaster tolerance management console are different interfaces, the configuration interface of the disaster tolerance management console may be directly visible to the operation and maintenance person. Alternatively, in the case where the user interface and the configuration interface of the disaster tolerance management console are different interfaces, during the operation and maintenance person logging in the disaster tolerance management console, by encrypting with a key, the user interface may be displayed firstly, then a key for decrypting may be input by clicking a certain button and/or a certain position on the interface, and/or the key for decrypting the configuration interface is directly input, so that the configuration interface to be controlled by the operation and maintenance person is displayed.

At operation S 104, synchronizing, according to the first synchronization policy, data of the entity objects of the middleware type of the first site to the entity objects of the middleware type of the second site.

In an implementation, in a case where the disaster tolerance parameters include: a priority of QoS and a communication address, the first synchronization policy generated is a data synchronization priority policy, for each entity object, generated according to the priority of QoS and the communication address corresponding to interactive data of each entity object of the first site and/or the second site, and according to the first synchronization policy, data of the entity objects of the middleware type of the first site is synchronized to the entity objects of the middleware type of the second site. Therefore, it is ensured that data synchronization is firstly performed on the entity object with a relatively higher priority, and data synchronization for the entity object with a relatively lower priority is delayed in a queue or is paused. The synchronization policy includes at least one of: a prioritization order, or an allocation of synchronization channels. The synchronization may be first performed on the key service data with a relatively higher priority through an exclusive channel, and the statistical service data with a relatively lower priority queues up to share one channel for synchronization or synchronization of the statistical service data with the relatively lower priority may be paused to give up the channel.

In an implementation, in a case where the disaster tolerance parameters include: a preset priority of QoS, a preset communication address, and a preset synchronization period, the first synchronization policy generated includes: according to the preset priority of QoS of each entity object, the preset communication address corresponding to interactive data of each entity object of the first site and/or the second site, and the preset synchronization period, generating a data synchronization priority policy for each entity object, and synchronizing, according to the first synchronization policy, data of the entity objects of the middleware type of the first site to the entity objects of the middleware type of the second site.

The disaster tolerance data is synchronized in real time or periodically. For middleware entity objects to be synchronized in real time, data is synchronized from the primary site to the standby site in a message stream mode and takes effect in real time. For middleware entity objects to be synchronized periodically, data is synchronized from the primary site to the standby site with a preset synchronization period and takes effect periodically by importing or exporting object snapshots. Therefore, it is ensured that data synchronization is firstly performed on the entity object with a relatively higher priority, and data synchronization for the entity object with a lower priority is delayed in a queue or is paused.

In an implementation, during synchronizing, according to the first synchronization policy, data of the entity objects of the middleware type of the first site to the entity objects of the middleware type of the second site, the method may further include: collecting a synchronization state of the data of each entity object of the first or second site in synchronization, adjusting, in response to that a first preset event occurs in the synchronization state, the first synchronization policy to a second synchronization policy, and synchronizing, through the second synchronization policy, the data of the entity objects of the middleware type of the first site to the entity objects of the middleware type of the second site. The synchronization state includes at least one of: an occupancy rate of a bandwidth for synchronization of at least one middleware entity object, an efficiency of data synchronization of each middleware entity object, a connection state of a link between the first site and the second site, a connection state of a network, or timeout for connecting the entity objects of each middleware type of the primary site to the entity objects of each middleware type of the standby site. The adjusting, in response to that a first preset event occurs in the synchronization state, the first synchronization policy to a second synchronization policy includes at least one of: in response to that the efficiency of data synchronization of at least one entity object of the middleware type is detected to be reduced, pausing data synchronization of another entity object with a lower priority than the at least one entity object; in response to that the occupancy rate of the bandwidth for synchronization is detected to be relatively low, increasing a synchronous channel and/or a synchronous thread for the at least one entity object; in response to that the connection state of the link between the first site and the second site is disconnected, displaying a preset operation interface, with the operation interface being configured for manually synchronizing the data of the entity objects of the middleware type from the first site to the second site; in response to that at least one piece of data of all synchronization data of the second site is detected to be out of synchronization with real-time data of the first site or there is a synchronization error, restarting the entity object of the middleware type corresponding to the at least one piece of data, and then synchronizing the at least one piece of data, where restarting the entity object of the middleware type corresponding to the at least one piece of data may further include re-connecting the middleware entity object of the first site with the middleware entity object of the second site, and restarting, in response to that the re-connecting fails for a preset number of times (i.e., the middleware entity object of the first site and the middleware entity object of the second site are still not connected), the entity object of the middleware type corresponding to the at least one piece of data; or in response to too much data of entity objects being backlogged is detected in a sharing channel or exclusive channel during a synchronization, pausing synchronization for the entity object with a lower priority than the entity objects with data backlogged, and calling an idle channel obtained through the pausing to synchronize backlogged data of the entity obj ects.

In an implementation, after synchronizing, according to the first synchronization policy, the data of the entity objects of the middleware type of the first site to the entity objects of the middleware type of the second site, the method may further include: switching roles of the first site and the second site so that the first site becomes a second standby site, and the second site becomes a second primary site, and stopping data synchronization according to the first synchronization policy; clearing unsynchronized data cache of the entity objects of the middleware type of the first primary site; generating a third synchronization policy according to re-configured disaster tolerance parameters of the entity objects of each middleware type; and synchronizing, according to the third synchronization policy, the data of the entity objects of the middleware type of the second primary site to the entity objects of the middleware type of the second standby site.

Before synchronizing, according to the third synchronization policy, the data of the entity objects of the middleware type of the second primary site to the entity objects of the middleware type of the second standby site, the method may further include collecting a relevant state of the entity objects of each middleware type of the second primary site during operating of the entity objects. The relevant state includes at least one of: a hardware operating state desired for operation of the middleware type, or an operating state of the middleware type itself. The hardware operating state desired for operation of the middleware type includes at least one of: a network bandwidth, an occupancy rate of a CPU, a utilization rate of a memory, or a utilization rate of an I/O resource. Accordingly, generating the third synchronization policy according to the disaster tolerance parameters includes: adjusting, according to the relevant state, a priority and/or channel for data synchronization of the entity objects of each middleware type. In an implementation, in a case where the relevant state collected exceeds a preset index, the operation and maintenance person may be informed, via a mail or short message within a preset time, to take intervention, and an abnormal state and a prompt message are displayed on a user interface to guide the operation and maintenance person to resolve a fault according to processing suggestions.

During synchronizing, according to the third synchronization policy, the data of the entity objects of the middleware type of the second primary site to the entity objects of the middleware type of the second standby site, the method may further include: collecting a synchronization state of the data of each entity object of the primary or standby site in synchronization, and switching, in response to that a first preset event occurs in the synchronization state, the third synchronization policy to the second synchronization policy.

In an implementation, after synchronizing, according to the first synchronization policy, the data of the entity objects of the middleware type of the first site to the entity objects of the middleware type of the second site, the method may further include: displaying, on the disaster tolerance management console, a synchronization state of data of the entity objects of each middleware type of the first site or the second site; displaying the disaster tolerance parameters of each middleware entity object; and displaying the relevant state of the entity objects of each middleware type during operating of the entity objects; displaying a connection state of a link between the first site and the second site; and displaying data content of each entity object, and the like.

The disaster tolerance management console may display a connection condition by the operation interface during connecting the first site to the second site, and display a synchronization state of data of the entity objects of each middleware type of the first site or the second site in real time during collecting the relevant state or the synchronization state; and display the relevant state of the entity objects of each middleware type during operating of the entity objects. After the disaster tolerance parameters being set, the disaster tolerance parameters of each middleware entity object are displayed on the interface of the disaster tolerance management console. The relevant state of the middleware type may be displayed in a list form, and the operation interface may further include an operation bar for manually switching between the primary site and the standby site, and an operation bar for automatically switching between the primary site and the standby site. Alternatively, an operation bar may be provided for the entity objects of each middleware type, and the operation bar includes at least one of: an operation bar for configuring parameters, an operation bar for automatic synchronization, or an operation bar for manual operation.

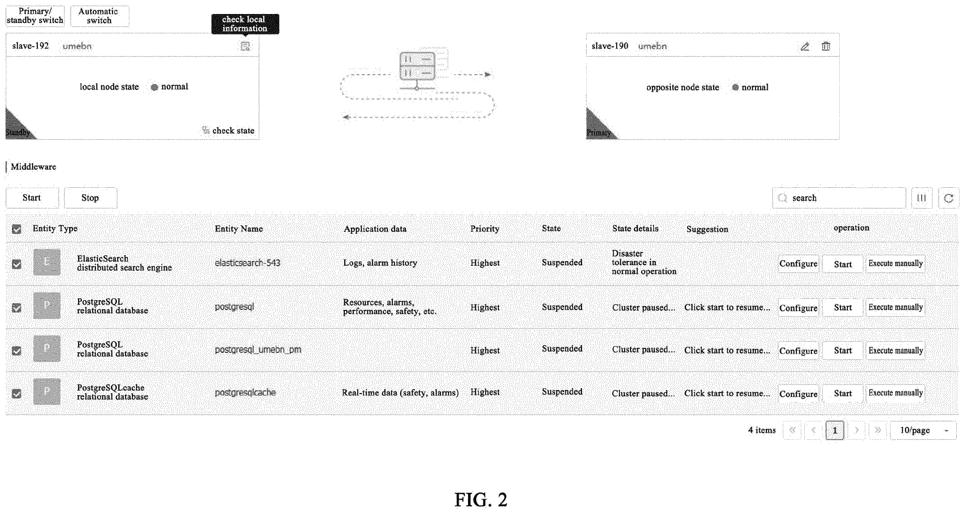

The displaying of the interface of the disaster tolerance management console may be as shown in FIG. 2, through the displaying of the interface of the disaster tolerance management console, the state of operating of the disaster tolerance may be visually and globally controlled, the displaying of the interface of the disaster tolerance management console includes displaying a state of a link between the primary site and the standby site, the disaster tolerance parameters and an entry of a process for managing life of the disaster tolerance of each middleware entity object, a health degree and an alarm condition of operating of the system, an operating state or progress of synchronization of middleware data, and the like. Further, the interface may be operated by a user and/or an operation and maintenance person, so that the disaster tolerance of the middleware is flexibly enabled and disabled according to a granularity of a middleware instance as desired.

According to the disaster tolerance method for middleware of PaaS provided in the present application, the primary site is determined and the primary site and the standby site are connected in response to detecting that the middleware type of the standby site satisfies the preset condition; the disaster tolerance parameters are configured for entity objects of respective middleware types of the primary site and the standby site, a data synchronization policy is generated according to the disaster tolerance parameters, and according to the synchronization policy, data of the entity objects of the middleware type of the primary site is synchronized to the entity objects of the corresponding middleware type of the standby site, the service disaster tolerance is no longer tightly coupled with the service, and no additional specific commercial software or hardware technical platform is desired in the service disaster tolerance, thereby saving the cost of the disaster tolerance.

According to the disaster tolerance method for middleware of PaaS provided by the present application, the service disaster tolerance is no longer tightly coupled with the service, and no additional specific commercial software or hardware technical platform is desired in the service disaster tolerance, thereby saving the cost of the disaster tolerance. For ease of understanding, the disaster tolerance method for middleware of PaaS according to the present application is described below with reference to an application scenario.

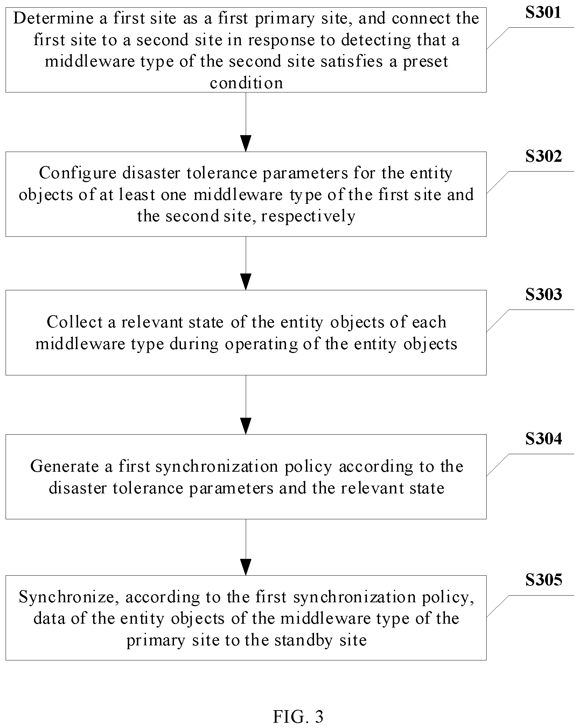

FIG. 3 is a flowchart of a disaster tolerance method for middleware of PaaS according to the present application. The disaster tolerance method for middleware of PaaS may include operations S301 to S305.

At operation S301, determining a first site as a first primary site, and connecting the first site to a second site in response to detecting that a middleware type of the second site satisfies a preset condition.

In the present application, the first site includes: at least one middleware type, and entity objects of the middleware type. Each middleware type may include 1 to n entity objects, where the number of the entity objects is equal to n, and n is generally a natural number greater than zero. The second site is a first standby site, and includes a plurality of middleware types, and entity objects of the middleware types, each middleware type may include 1 to m entity objects, where the number of the entity objects is equal to m, and m is generally a natural number greater than zero. The middleware types of the first site and the second site each include at least one of: Posetgre database, ElasticSearch database, FTP service, Redis service, Kafak service, LDAP service, Zookeeper, or PVC shared file. Whether the detected middleware type of the second site satisfies the preset condition specifically includes whether the middleware type of the first site and the number of the entity objects of the middleware type of the first site are consistent with the middleware type of the second site and the number of the entity objects of the middleware type of the second site, and whether versions of the middleware type of the first site and the middleware type of the second site are compatible or consistent with each other.

At operation S302, configuring disaster tolerance parameters for the entity objects of at least one middleware type of the first site and the second site, respectively.

In the present application, the disaster tolerance parameters include: a priority of QoS and a communication address. The communication address is a communication address corresponding to interactive data of each entity object of the first site and/or the second site.

At operation S303, collecting a relevant state of the entity objects of each middleware type during operating of the entity objects.

The relevant state includes at least one of: a hardware operating state desired for operation of the middleware type, or an operating state of the middleware type itself. The hardware operating state desired for operation of the middleware type includes at least one of: a network bandwidth, an occupancy of a CPU, a utilization rate of a memory, a utilization rate of an I/O resource.

At operation S304, generating a first synchronization policy according to the disaster tolerance parameters and the relevant state.

In the present application, the first synchronization policy is generated according to the disaster tolerance parameters and the relevant state, and the disaster tolerance parameters include: a priority of QoS, a communication address. The synchronization policy includes: a prioritization order, or an allocation of synchronization channels. The first synchronization policy generated is a data synchronization priority policy, for each entity object, generated according to the priority of QoS and the communication address corresponding to interactive data of each entity object of the first site and/or the second site. The relevant state of the entity objects of each middleware type during operating of the entity objects is collected, and a priority and/or channel for synchronizing data of the entity objects of each middleware type is adjusted, to generate the first synchronization policy. Therefore, it is ensured that data synchronization is firstly performed on the entity object with a relatively higher priority, and data synchronization for the entity object with a relatively lower priority is delayed in a queue or paused. The synchronization may be first performed on key service data with a relatively higher priority through an exclusive channel, and statistical service data with a relatively lower priority queues up to share one channel for synchronization or synchronization of the statistical service data with the relatively lower priority may be paused to give up the channel.

At operation S305, synchronizing, according to the first synchronization policy, data of the entity objects of the middleware type of the primary site to the standby site.

According to the disaster tolerance method for middleware of PaaS provided in the present application, a mutual disaster recovery relationship is built between the primary site and the standby site, disaster tolerance parameters of middleware entity objects of the primary site and the standby site are configured, the relevant state of the entity objects of each middleware type during operating of the entity objects is collected, and the first synchronization policy is generated according to the disaster tolerance parameters and the relevant state so as to synchronize data of the entity objects of the primary site to the standby site. Therefore, service data of various middleware entity objects can be synchronized more flexibly, and a good health state of service disaster tolerance is achieved, which can better satisfy an operation scenario of a telecom-level PaaS system, such as a scenario where an operator provides unified cloud platform virtualization infrastructure, an equipment manufacturer provides network element devices, and the disaster tolerance is divided and deployed according to services supported by the equipment manufacturer, so that the convenience and flexibility of deployment are greatly improved, and the deployment cost of disaster tolerance is greatly reduced.

According to the disaster tolerance method for middleware of PaaS provided by the present application, the service disaster tolerance is no longer tightly coupled with the service, and no additional specific commercial software or hardware technical platform is desired in the service disaster tolerance, thereby saving the cost of the disaster tolerance. For ease of understanding, the disaster tolerance method for middleware of PaaS according to the present application is described below with reference to an application scenario.

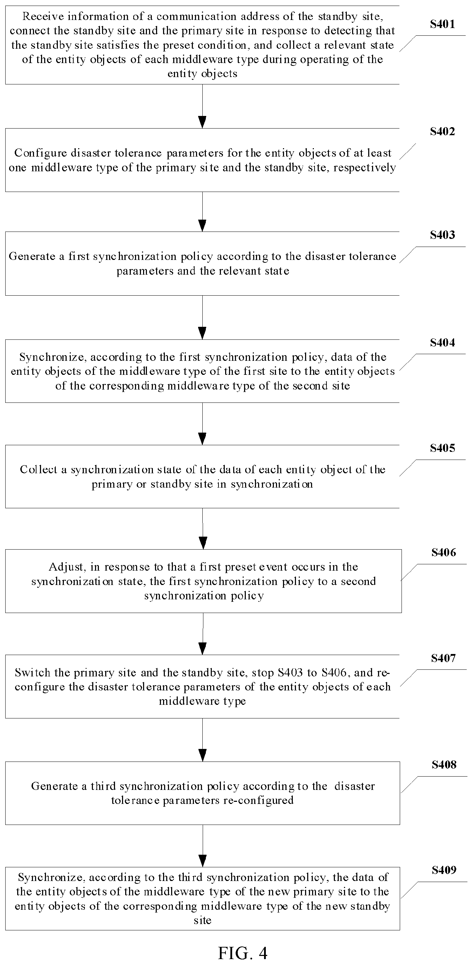

FIG. 4 is a flowchart of a disaster tolerance method for middleware of PaaS according to the present application. The disaster tolerance method for middleware of PaaS may include operations S401 to S409.

At operation S401, receiving information of a communication address of the standby site input by a user, connecting the standby site and the primary site in response to detecting that the middleware type of the standby site satisfies the preset condition, and collecting a relevant state of the entity objects of each middleware type during operating of the entity objects.

In the present application, a PaaS platform and a service system are installed both locally and remotely, it has been verified that services of the middleware can run normally, and two places are divided and determined as the primary and standby sites for disaster tolerance and information of a network is further determined. A user logs in the disaster tolerance management console, inputs a communication address and information of an opposite terminal for disaster tolerance and accesses the site. In the process of accessing and pairing a disaster tolerance relationship, whether the middleware types of the primary site and the standby site are matched is desired to be detected, and the standby site is to be successfully accessed merely in a case where the number of the entity objects, the versions and the primary/standby roles all satisfy access conditions. The middleware type includes at least one of: Posetgre database, ElasticSearch database, FTP service, Redis service, Kafak service, LDAP service, Zookeeper, or PVC shared file. Each middleware type may include 1 to n entity objects, where the number of the entity objects is equal to n, and n is generally a natural number greater than zero. The relevant state includes at least one of: a hardware operating state desired for operation of the middleware type, or an operating state of the middleware type itself. The hardware operating state desired for operation of the middleware type includes at least one of: a network bandwidth, an occupancy rate of a CPU, a utilization rate of a memory, or a utilization rate of an I/O resource.

At operation S402, configuring disaster tolerance parameters for the entity objects of at least one middleware type of the primary site and the standby site, respectively.

In the present application, the disaster tolerance parameters include: a priority of QoS, a communication address, a synchronization period, and a timeout parameter. The communication address is a communication address corresponding to interactive data of each entity object of the first site and/or the second site.

At operation S403, generating a first synchronization policy according to the disaster tolerance parameters and the relevant state.

In the present application, the first synchronization policy generated includes: according to the preset priority of QoS of each entity object, the preset communication address corresponding to interactive data of each entity object of the first site and/or the second site, and the preset synchronization period, generating, in response to that a middleware entity object of the first site and a middleware entity object of the second site are not connected within a preset time in a connection process, a data synchronization priority policy for each entity object, re-connecting the middleware entity object of the first site with the middleware entity object of the second site for a preset number of times, and restarting middleware entity objects in response to that a preset timeout period is reached but the middleware entity object of the first site and the middleware entity object of the second site are still not connected (i.e., the re-connecting fails), and performing, after the re-connecting is successful (i.e., the middleware entity object of the first site and the middleware entity object of the second site are connected), data synchronization firstly on the entity object with a relatively higher priority according to the preset priority and the preset synchronization period, and delaying data synchronization on the entity object with a relatively lower priority in a queue or pausing data synchronization on the entity object with a relatively lower priority.

At operation S404, synchronizing, according to the first synchronization policy, data of the entity objects of the middleware type of the first site to the entity objects of the middleware type of the second site.

If a middleware entity object of the first site and a middleware entity object of the second site are not connected within a preset time in the connection process, the method includes generating a data synchronization priority policy for each entity object, and re-connecting the middleware entity object of the first site with the middleware entity object of the second site for a preset number of times, and in response to that a preset timeout period is reached but the middleware entity object of the first site and the middleware entity object of the second site are still not connected (i.e., the re-connecting fails), restarting such middleware entity objects, and in response to that the re-connecting is successful (i.e., the middleware entity object of the first site and the middleware entity object of the second site are connected), performing data synchronization firstly on the entity object with a relatively higher priority according to the preset priority and the preset synchronization period, and delaying data synchronization on the entity object with a relatively lower priority in a queue or pausing the data synchronization on the entity object with a relatively lower priority. For middleware entity objects to be synchronized in real time, data is synchronized from the primary site to the standby site in a message stream mode and takes effect in real time. For middleware entity objects to be synchronized periodically, data is synchronized from the primary site to the standby site with a preset synchronization period and takes effect periodically by importing or exporting object snapshots.

At operation S405, collecting a synchronization state of the data of each entity object of the primary or standby site in synchronization.

The synchronization state includes at least one of: an occupancy rate of a bandwidth for synchronization of at least one middleware entity object, an efficiency of data synchronization of each middleware entity object, a connection state of a link between the first site and the second site, a connection state of a network, or timeout for connecting the entity objects of each middleware type of the primary site to the entity objects of each middleware type of the standby site.

At operation S406, adjusting, in response to that a first preset event occurs in the synchronization state, the first synchronization policy to a second synchronization policy.

In the present application, the adjusting, in response to that a first preset event occurs in the synchronization state, the first synchronization policy to a second synchronization policy includes at least one of: in response to that the efficiency of data synchronization of at least one entity object of the middleware type is detected to be reduced, pausing data synchronization of another entity object with a lower priority than the at least one entity object; in response to that the occupancy rate of the bandwidth for synchronization is detected to be relatively low, increasing a synchronous channel and/or a synchronous thread for the at least one entity object; in response to that the connection state of the link between the first site and the second site is disconnected, displaying a preset operation interface, with the operation interface being configured for manually synchronizing data of the entity objects of the middleware type from the first site to the second site; in response to that at least one piece of data of all synchronization data of the second site is detected to be out of synchronization with real-time data of the first site or there is a synchronization error, restarting the entity object of the middleware type corresponding to the at least one piece of data, and then synchronizing the at least one piece of data, where restarting the entity object of the middleware type corresponding to the at least one piece of data may further include re-connecting the middleware entity object of the first site with the middleware entity object of the second site, and restarting, in response to that the re-connecting fails for a preset number of times (i.e., the middleware entity object of the first site and the middleware entity object of the second site are still not connected), the entity object of the middleware type corresponding to the at least one piece of data; or in response to that too much data of entity objects being backlogged is detected in a share channel or exclusive channel during a synchronization, pausing synchronization for the entity object with a lower priority than the entity objects with data backlogged, and calling an idle channel obtained through the pausing to synchronize backlogged data of the entity objects. S404 to S406 may be repeated till middleware data reaches a good or desired state of synchronization, or till the service stops running, or till the primary site and the standby site are switched.

At operation S407, switching the primary site and the standby site, stopping S403 to S406, and re-configuring the disaster tolerance parameters of the entity objects of each middleware type.

In the present application, switching the primary site and the standby site may be performed manually by a user logging in the disaster tolerance management console, or may be initiated by a system of the disaster tolerance management console through autonomously judging and deciding in response to a disaster occurring, for example, in response to that various preset conditions of automatic switching are satisfied, the system for disaster tolerance triggers, in response to determining that the primary site is offline and out of service, a process of automatic switching to switch a service to the standby site for further operation. After the primary site and the standby site are switched, service data not synchronized and cached for synchronization in each middleware entity object in the original primary site (i.e., first primary site), is desired to be cleared, and then, data benchmark of the new primary site (i.e., second primary site) is synchronized and used as a standard baseline of data for disaster tolerance for service data of the new standby site (i.e., second standby site).

The re-configured disaster tolerance parameters of the entity objects of each middleware type may be disaster recovery parameters configured in advance, or disaster tolerance parameters manually configured through the disaster tolerance management console. The disaster tolerance parameters may include a preset priority of data and a preset communication address, or may include: a preset priority of data, a preset communication address, a preset timeout time, and a preset synchronization period. The re-configured disaster tolerance parameters of each middleware type may also be disaster tolerance parameters configured before the primary site and the standby site are switched.

At operation S408, generating a third synchronization policy according to the re-configured disaster tolerance parameters.

At operation S409, synchronizing, according to the third synchronization policy, the data of the entity objects of the middleware type of the new primary site (i.e., second primary site) to the entity objects of the middleware type of the new standby site (i.e., second standby site).

In the present application, before synchronizing, according to the third synchronization policy, the data of the entity objects of the middleware type of the second primary site to the entity objects of the middleware type of the second standby site, the method may further include collecting a relevant state of the entity objects of each middleware type of the second primary site during operating of the entity objects. The relevant state includes at least one of: a hardware operating state desired for operation of the middleware type, or an operating state of the middleware type itself. The hardware operating state desired for operation of the middleware type includes at least one of: a network bandwidth, an occupancy rate of a CPU, a utilization rate of a memory, or a utilization rate of an I/O resource. Accordingly, generating the third synchronization policy according to the disaster tolerance parameters includes: adjusting, according to the relevant state, a priority and/or channel for data synchronization of the entity objects of each middleware type. In an implementation, in response to that the relevant state collected exceeds a preset index, the operation and maintenance person may be informed via a mail or short message within a preset time to take intervention, and an abnormal state and a prompt message are displayed on a user interface to guide the operation and maintenance person to resolve a fault according to processing suggestions.

During synchronizing, according to the third synchronization policy, the data of the entity objects of the middleware type of the second primary site to the entity objects of the middleware type of the second standby site, the method may further include: collecting a synchronization state of the data of each entity object of the primary or standby site in synchronization, and switching, in response to that a first preset event occurs in the synchronization state, the third synchronization policy to the second synchronization policy.

According to the disaster tolerance method for middleware of PaaS provided in the present application, information of the communication address of the standby site input by a user is received, the standby site and the primary site are connected in response to detecting that the middleware type of the standby site satisfies the preset condition, the relevant state of the entity objects of each middleware type during operating of the entity objects is collected, the disaster tolerance parameters for the entity objects of at least one middleware type of the primary site and the standby site, including the preset priority of QoS of each entity object, the preset communication address corresponding to interactive data of each entity object of the first site or the second site, and the preset synchronization period, are configured, if a middleware entity object of the first site and a middleware entity object of the second site are not connected within a preset time in a connection process, a data synchronization priority policy is generated for each entity object, the middleware entity object of the first site and the middleware entity object of the second site are re-connected for a preset number of times, the middleware entity objects are restarted in response to that a preset timeout period is reached but the middleware entity object of the first site and the middleware entity object of the second site are still not connected (i.e., re-connecting fails), and after the re-connecting is successful (i.e., the middleware entity object of the first site and the middleware entity object of the second site are connected), data synchronization is firstly performed on the entity object with a relatively higher priority according to the preset priority and the preset synchronization period, and data synchronization on the entity object with a relatively lower priority is delayed in a queue or paused, the synchronization state of the data of each entity object of the primary or standby site in synchronization is collected, and in response to that the first preset event occurs in the synchronization state, the first synchronization policy is adjusted to the second synchronization policy, and data synchronization is performed according to the second synchronization policy. After the primary site and the standby site are switched manually or automatically, the original synchronization of middleware data is stopped, data benchmark of the new primary site is taken as a standard baseline of data for disaster tolerance for service data of the new standby site, and according to the configured disaster tolerance parameters, data of each middleware entity object of the new primary site is synchronized to the standby site. Therefore, with the method provided by the present disclosure, decoupling from the specific service is achieved, and disaster tolerance is carried out on merely a middleware instance used by the service. Therefore, disaster tolerance of the middleware can be flexibly enabled and disabled according to a granularity of the middleware instance as desired, data synchronization of middleware entity objects in the disaster tolerance can be adjusted continuously and finally and improved, thereby ensuring a desired or good state of the disaster tolerance, which can better satisfy an operation scenario of a telecom-level PaaS system, such as a scenario where an operator provides unified cloud platform virtualization infrastructure, an equipment manufacturer provides network element devices, and the disaster tolerance is divided and deployed according to services supported by the equipment manufacturer, so that the convenience and flexibility of deployment are greatly improved, and the deployment cost of disaster tolerance is greatly reduced.

In order to solve the technical problem of tight coupling with the service or the additional specific service software or hardware technical platform being desired in service disaster tolerance, the present application further provides a disaster tolerance apparatus for middleware of PaaS, which is described below with reference to the accompanying drawings.

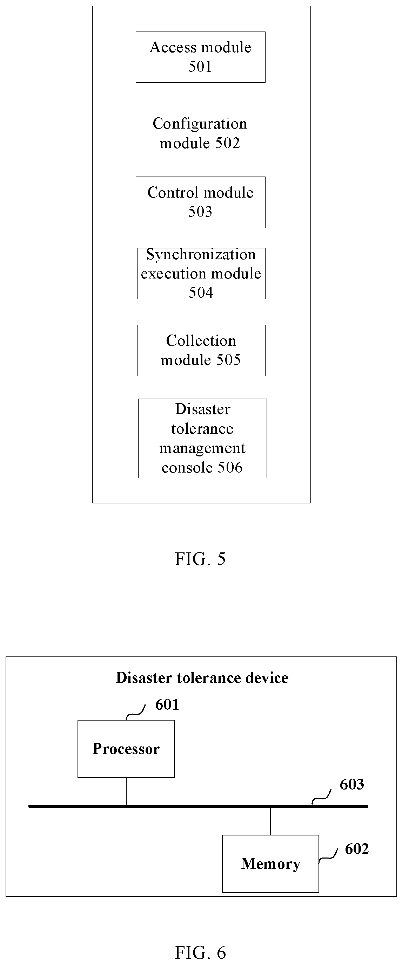

Referring to FIG. 5, a schematic block diagram of a disaster tolerance apparatus for middleware of PaaS according to the present application is shown. The disaster tolerance apparatus includes: an access module 501, a configuration module 502, a control module 503, and a synchronization execution module 504.

The access module 501 is configured to determine a first site as a first primary site, with the first site including at least one middleware type, and entity objects of the middleware type; connect the first site to a second site in response to detecting that a middleware type of the first site and a number of entity objects of the middleware type of the first site are consistent with a middleware type of the second site and a number of entity objects of the middleware type of the second site, and versions of the middleware type of the first site and the middleware type of the second site are compatible or consistent with each other, with the second site being a standby site.

The configuration module 502 is configured to configure disaster tolerance parameters for the entity objects of at least one middleware type of the first site and the second site, respectively, with the disaster tolerance parameters including a priority of QoS and a communication address; and send the disaster tolerance parameters to the control module 503 and the synchronization execution module 504.

The control module 503 is configured to receive the disaster tolerance parameters, and generate a first synchronization policy according to the disaster tolerance parameters; and send the first synchronization policy to the synchronization execution module 504.

The synchronization execution module 504 is configured to receive the disaster tolerance parameters and the first synchronization policy, and synchronize, according to the first synchronization policy, data of the entity objects of the middleware type of the first site to the entity objects of the middleware type of the second site.

In the present application, the first site includes at least one middleware type, and entity objects of the middleware type, each middleware type may include 1 to n entity objects, where the number of the entity objects is equal to n, and n is generally a natural number greater than zero. The second site is a first standby site, and includes a plurality of middleware types, and entity objects of the middleware types, each middleware type may include 1 to m entity objects, where the number of the entity objects is equal to m, and m is generally a natural number greater than zero. The middleware types of the first site and the second site each include at least one of: Posetgre database, ElasticSearch database, FTP service, Redis service, Kafak service, LDAP service, Zookeeper, or PVC shared file. The middleware type of the second site satisfying the preset condition specifically includes a case where the middleware type of the first site and the number of entity objects of the middleware type of the first site are consistent with the middleware type of the second site and the number of entity objects of the middleware type of the second site, and versions of the middleware type of the first site and the middleware type of the second site are compatible or consistent with each other. The second site is a standby site.

In an implementation, an operation and maintenance person or user may access an opposite site by inputting an access parameter through an operation interface of a disaster tolerance management console 506, and set a role of a site, for example, set the local site as a primary site. Then, information of the preset condition of the opposite site is acquired through an access address of the opposite site, to be compared with information of a system condition of the local site, if the conditions are matched completely, the access is successful, and a primary/standby relationship is established.

The disaster tolerance parameters of the first site and the second site configured by the configuration module 502 further include at least one of: a synchronization period or a timeout parameter. In an implementation, the operation and maintenance person may select any certain entity object of the first site or the second site on the configuration interface of the disaster tolerance management console 506 to configure or view the disaster tolerance parameters. The communication address in the disaster tolerance parameters is a communication address corresponding to interactive data of each entity object of the first site or the second site.

In the present application, the control module 503 generates a first synchronization policy according to the disaster tolerance parameters, and in response to that the disaster tolerance parameters include a priority of QoS and a communication address, the first synchronization policy generated is a data synchronization priority policy for each entity object generated according to the priority of QoS and the communication address corresponding to interactive data of each entity object of the first site and the second site. Therefore, it is ensured that data synchronization is firstly performed on the entity object with a relatively higher priority, and data synchronization on the entity object with a relatively lower priority is delayed in a queue or is paused. The synchronization policy includes at least one of: a prioritization order, or an allocation of synchronization channels. The synchronization may be performed on the key service data with a relatively higher priority firstly through an exclusive channel, and the statistical service data with the lower priority queues up to share one channel for synchronization or synchronization of the statistical service data with the lower priority may be paused to give up the channel. In a case where the disaster tolerance parameters include a preset priority of QoS, a preset communication address, a preset synchronization period, and a preset timeout parameter, the first synchronization policy generated includes: according to the preset priority of QoS of each entity object, the preset communication address corresponding to interactive data of each entity object of the first site or the second site, and the preset synchronization period, in response to that a middleware entity object of the first site and a middleware entity object of the second site are not connected within a preset time in a connection process, generating a data synchronization priority policy for each entity object, and re-connecting the middleware entity object of the first site with middleware entity object of the second site for a preset number of times, and restarting such middleware entity objects in response to that a preset timeout period is reached but the middleware entity object of the first site with middleware entity object of the second site are still not connected (i.e., the re-connecting fails), and performing, after the re-connecting is successful (i.e., the middleware entity object of the first site with middleware entity object of the second site are connected), data synchronization firstly on the entity object with a relatively higher priority according to the preset priority and the preset synchronization period, and delaying data synchronization on the entity object with a relatively lower priority in a queue or pausing the data synchronization on the entity object with a relatively lower priority.

In the present application, the disaster tolerance apparatus may further include: a collection module 505 configured to collect a relevant state of the entity objects of each middleware type during operating of the entity objects, with the relevant state including at least one of: a hardware operating state desired for operation of the middleware type, or an operating state of the middleware type itself; and send the relevant state to the control module 503.

The relevant state includes at least one of: a hardware operating state desired for operation of the middleware type, or an operating state of the middleware type itself. The hardware operating state desired for operation of the middleware type includes at least one of: a network bandwidth, an occupancy rate of a CPU, a utilization rate of a memory, or a utilization rate of an I/O resource. In an implementation, in response to that the relevant state collected exceeds a preset index, the operation and maintenance person may be informed via a mail or short message within a preset time to take intervention, and an abnormal state and a prompt message are displayed on a user interface to guide the operation and maintenance person to resolve a fault according to processing suggestions.

The control module 503 is further configured to receive the relevant state and generate a first synchronization policy according to the disaster tolerance parameters and the relevant state. The first synchronization policy includes: adjusting, according to the relevant state, a priority for data synchronization of the entity object of the middleware type.

In an implementation, the control module 503 may adjust, according to the relevant state, a priority and/or channel for data synchronization of the entity objects of each middleware type.

In the present application, the collection module 505 of the disaster tolerance apparatus may be further configured to collect, during the synchronization execution module 504 synchronizing the data of the entity objects of the middleware type of the first site to the entity objects of the middleware type of the second site according to the first synchronization policy, a synchronization state of the data of each entity object of the middleware types in synchronization, and send the synchronization state to the control module 503. The synchronization state includes at least one of: an occupancy rate of the bandwidth for synchronization of at least one middleware entity object, an efficiency of data synchronization of each middleware entity object, a connection state of a link between the first site and the second site, a connection state of a network, or timeout for connecting the entity objects of each middleware type of the primary to the entity objects of each middleware type of the standby site.

The control module 503 is further configured to adjust, in response to that a preset event occurs in the synchronization state, the first synchronization policy to a second synchronization policy, and send the second synchronization policy to the synchronization execution module 504.

The synchronization execution module 504 is further configured to synchronize, through the second synchronization policy, the data of the entity objects of the middleware type of the first site to the entity objects of the middleware type of the second site.

In an implementation, the control module 503 adjusting, in response to that the preset event occurs in the synchronization state, the first synchronization policy to the second synchronization policy includes at least one of: in response to that an efficiency of data synchronization of at least one entity object of the middleware type is detected to be reduced, pausing data synchronization of another entity object with a lower priority than the at least one entity object; in response to that an occupancy rate of bandwidth for synchronization is detected to be relatively low, increasing a synchronous channel and/or a synchronous thread for the at least one entity object; in response to that a connection state of a link between the first site and the second site is disconnected, displaying a preset operation interface, with the operation interface being configured for manually synchronizing data of the entity objects of the middleware type from the first site to the second site; in response to that at least one piece of data of all synchronization data of the second site is detected to be out of synchronization with real-time data of the first site or there is a synchronization error, restarting the entity object of the middleware type corresponding to the at least one piece of data, and then synchronizing the at least one data piece, where restarting the entity object of the middleware type corresponding to the at least one piece of data may further include re-connecting the middleware entity object of the first site with the middleware entity object of the second site, and restarting, in response to that the re-connecting fails for a preset number of times (i.e., the middleware entity object of the first site and the middleware entity object of the second site are still not connected), the entity object of the middleware type corresponding to the at least one piece of data; or in response to that too much data of entity objects being backlogged is detected in a share channel or exclusive channel during a synchronization, pausing synchronization of another entity object with a relatively lower priority than the entity objects with data backlogged, and calling an idle channel obtained through the pausing to synchronize data of the entity objects with data backlogged.

The control module 503 may receive a health degree performance index and a state parameter of a disaster tolerance function, during operating, of the primary site collected by the collection module 505, and generate, according to the preset priority of middleware entity objects and in combination with the network bandwidth, the occupancy rate of the CPU, the utilization rate of the memory, and/or the utilization rate of the I/O resource, a data synchronization policy according to an intelligent algorithm and deliver the data synchronization policy to the synchronization execution module 504 to control and adjust the priority of data synchronization, so as to ensure that the synchronization is first performed on key service data with a relatively higher priority through an exclusive channel, and statistical service data with a relatively lower priority queues up to share one channel for synchronization or synchronization of the statistical service data with a relatively lower priority is paused to give up the channel, and the health degree performance index of the middleware entity object is monitored, and if a performance load exceeding a quota (i.e., standard) or a service processing of disaster tolerance of a middleware being abnormal is detected, an alarm is desired to be given timely, and an operation and maintenance person is informed via a mail or short message to take intervention, and an abnormal state and a prompt message are displayed on a user interface to guide the operation and maintenance person to resolve a fault according to processing suggestions. That is, according to a received state index of operating, the data synchronization policy for the middleware entity objects in the disaster tolerance can be adjusted continuously and finally and improved, thereby ensuring a good state of the disaster tolerance.

The synchronization execution module 504 may perform data synchronization according to the synchronization policy, and in a case where the disaster tolerance parameters include a priority of QoS, a communication address, a synchronization period, and a timeout parameter, for middleware entity objects to be synchronized in real time, data is synchronized from the primary site to the standby site in a message stream mode and takes effect in real time. For middleware entity objects to be synchronized periodically, data is synchronized from the primary site to the standby site with a preset synchronization period and takes effect periodically by importing or exporting object snapshots.

In a synchronization process, the collection module 505 collects an operating state, and in response to that an abnormal condition such as network interruption, service unavailable, timeout for restarting, data backlogged exceeding a quota (i.e., standard) due to network congestion and the like is detected, the control module 503 generates a synchronization policy according to an intelligent algorithm, and delivers the data synchronization policy to the synchronization execution module 504 to adjust the mode for synchronization. For an abnormal error, retry or redoing is performed to recover synchronization duplication, or the middleware entity objects are restarted to reset the process, or the priority channel for data synchronization is dynamically adjusted, and the data synchronization with a relatively low priority is queued or paused, and the synchronization thread is dynamically adjusted and an exclusive or share channel is allocated for synchronization, so as to ensure that the data with the relatively high priority is synchronized first, the data the relatively low priority is queued up for synchronization, and a priority index of service data of the disaster tolerance is satisfied. If the middleware entity objects cannot be recovered by self-healing under any policy, it is reported with an alarm to inform the operation and maintenance person to intervene and solve the fault.

In the present application, the apparatus may further include a disaster tolerance management console 506, so that the disaster tolerance for the entity objects of the middleware type can be flexibly enabled and disabled through the disaster tolerance management console 506 according to a granularity of a middleware instance as desired. The disaster tolerance management console 506 is a portal and access of disaster tolerance management, which integrates management of the access module 501, management of the configuration module 502, and a function of intelligent control, can visually and globally control the operating state of the disaster tolerance, and includes displaying a state of a link between the primary site and the standby site, the disaster tolerance parameters and an entry of a life management process of the disaster tolerance for each middleware entity object, a health degree and alarm condition of operating of the system, and an operating state or progress of synchronization of middleware data.

The disaster tolerance for data synchronization of the middleware entity objects may be implemented in batch by pressing a key or as desired. Further, during maintenance or upgrade of version of the service or the site, a synchronization duplication process of the disaster tolerance is desired to be interrupted to avoid uncontrollable abnormal data synchronization, and the disaster tolerance management console 506 provides a key for stopping synchronization processes of all middleware entity objects for the disaster tolerance in batch, so that data duplication is paused. Meanwhile, a scheduling process of the control module 503 and an index collection process (for collecting indexes) related to the collection module 505 are stopped, so as to prevent reporting of an abnormal alarm triggered by mistake.

During operating of the disaster tolerance, various abnormal conditions, such as abnormal network interruption, outage and halt of the site, may occur, which may cause data disorder or an overlarge difference of data between the primary site and the standby site, and in a scenario where a local site is upgraded from a single site to the primary or standby site for disaster tolerance, full data synchronization between the primary site and the standby site may be implemented through a manual mandatory synchronization function provided by the disaster tolerance management console, to reach consistency of data for disaster tolerance between services of the primary site and the standby site rapidly, and after the manual mandatory synchronization is finished, data consistency between the primary site and the standby site is further guaranteed in real time in a data increment mode through a process of automatic incremental synchronization.

According to the disaster tolerance apparatus for middleware of PaaS provided in the present application, the access module 501 accesses the primary site and the standby site, configures disaster tolerance parameters for entity objects of at least one middleware type of the primary site and the standby site respectively, and sends the disaster tolerance parameters to the control module 503 and the synchronization execution module 504, the control module 503 receives the disaster tolerance parameters, generates a first synchronization policy according to the disaster tolerance parameters, and sends the first synchronization policy to the synchronization execution module 504, and the synchronization execution module 504 receives the disaster tolerance parameters and the first synchronization policy, and synchronizes, according to the first synchronization policy, data of the entity objects of the middleware type of the primary site to the entity objects of the corresponding middleware type of the standby site. Therefore, the service disaster tolerance is no longer tightly coupled with the service, and no additional specific commercial software or hardware technical platform is desired in the service disaster tolerance, thereby saving the cost of the disaster tolerance.

The present application further provides a disaster tolerance device. As shown in FIG. 6, the disaster tolerance device includes a processor 601, a memory 602 and a communication bus 603. The communication bus 603 is configured to enable communication connection between the processor 601 and the memory 602.

The processor 601 is configured to execute one or more computer programs stored in the memory 602 to implement at least one operation of the disaster tolerance method for middleware of PaaS according to the present application.

The present application further provides a computer readable storage medium, including a volatile or nonvolatile, removable or non-removable medium implemented in any method or technology for storing information, such as computer-readable instructions, data structures, computer program modules or other data. The computer-readable storage medium includes, but is not limited to, a random access memory (RAM), a read-only memory (ROM), an electrically erasable programmable read-only memory (EEPROM), a flash memory or any other memory technology, a compact disc read-only memory (CD-ROM), a digital versatile disc (DVD) or any other optical disc storage, a magnetic cartridge, a magnetic tape, a magnetic disk storage or any other magnetic storage device, or may be any other medium used for storing the desired information and accessible by a computer.

The computer-readable storage medium provided in the present application may be configured to store one or more computer programs which may be executed by a processor to implement at least one operation of the disaster tolerance method for middleware of PaaS according to the present application.

According to the present application, a mutual disaster recovery relationship is built between the primary site and the standby site, disaster tolerance parameters of the middleware entity objects of the primary site and the standby site are configured, a relevant state of the entity objects of each middleware type during operating of the entity objects is collected, and a first synchronization policy is generated according to the disaster tolerance parameters and the relevant state to synchronize data of the entity objects from the primary site to the standby site. Therefore, service data of various middleware entity objects can be synchronized more flexibly, and a good health state of service disaster tolerance is achieved, which can better satisfy an operation scenario of a telecom-level PaaS system, such as a scenario where an operator provides unified cloud platform virtualization infrastructure, an equipment manufacturer provides network element devices, and the disaster tolerance is divided and deployed according to services supported by the equipment manufacturer, so that the convenience and flexibility of deployment are greatly improved, and the deployment cost of disaster tolerance is greatly reduced.

As above, those skilled in the art will appreciate that all or some operations of the method described above, functional modules/units in the system and apparatus may be implemented as software (which may be implemented by computer program codes to be executed by a computing device), firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit.

Moreover, it is well known to those ordinary skilled in the art that a communication medium typically includes a computer-readable instruction, a data structure, a computer program module, or other data in a modulated data signal, such as a carrier wave or other transport mechanism, and may include any information delivery medium. Therefore, the present application is not limited to any specific combination of hardware and software.

The above are further detailed explanation of the present application in conjunction with specific implementations, and the present application is not to be construed as being limited to these implementations. For those skilled in the art to which the present application pertains, several simple deductions or substitutions may be made without departing from the concept of the present application, and these deductions or substitutions should be considered within the protection scope of the present application.

## Claims

1. A disaster tolerance method for middleware of platform as a service (PaaS), comprising:
determining a first site as a first primary site, and connecting the first site to a second site in response to detecting that a middleware type of the first site and a number of entity objects of the middleware type of the first site are consistent with a middleware type of the second site and a number of entity objects of the middleware type of the second site, and versions of the middleware type of the first site and the middleware type of the second site are compatible or consistent with each other, with the second site being a standby site;
configuring disaster tolerance parameters for the entity objects of at least one middleware type of the first site and the second site, with the disaster tolerance parameters comprising a priority of quality of service (QoS) and a communication address;
generating a first synchronization policy according to the disaster tolerance parameters; and
synchronizing, according to the first synchronization policy, data of the entity objects of the middleware type of the first site to the entity objects of the middleware type of the second site.

2. The disaster tolerance method according to claim 1, wherein the disaster tolerance parameters further comprise at least one of a synchronization period or a timeout parameter.

3. The disaster tolerance method according to claim 1, wherein generating the first synchronization policy according to the disaster tolerance parameters comprises:
collecting a relevant state of the entity objects of each middleware type of the first site during operating of the entity objects, with the relevant state comprising at least one of a hardware operating state desired for operation of the middleware type or an operating state of the middleware type itself; and
receiving the relevant state and generating the first synchronization policy according to the disaster tolerance parameters and the relevant state, with the first synchronization policy comprising adjusting, according to the relevant state, a priority for data synchronization of the entity object of the middleware type.

4. The disaster tolerance method according to claim 1, wherein synchronizing, according to the first synchronization policy, the data of the entity objects of the middleware type of the first site to the entity objects of the middleware type of the second site comprises:
collecting a synchronization state of the data in synchronization;
adjusting, in response to that a first preset event occurs in the synchronization state, the first synchronization policy to a second synchronization policy; and
synchronizing, through the second synchronization policy, the data of the entity objects of the middleware type of the first site to the entity objects of the middleware type of the second site.

5. The disaster tolerance method according to claim 4, wherein the synchronization state comprises: at least one of an occupancy rate of a bandwidth for synchronization of the at least one middleware type, an efficiency of data synchronization of the entity objects of the middleware type, or a connection state of a link between the first site and the second site; and
the adjusting, in response to that a first preset event occurs in the synchronization state, the first synchronization policy to a second synchronization policy comprises at least one of:
in response to that the efficiency of data synchronization of at least one entity object of the middleware type is detected to be reduced, pausing data synchronization of another entity object with a lower priority than the at least one entity object;
in response to that the occupancy rate of the bandwidth for synchronization is detected to be low, increasing a synchronous channel and a synchronous thread for the at least one entity object;
in response to that the connection state of the link is disconnected, displaying a preset operation interface; or
in response to that at least one piece of data of all synchronization data of the second site is detected to be out of synchronization with real-time data of the first site or there is a synchronization error, restarting the entity object of the middleware type corresponding to the at least one data piece, and then synchronizing the at least one data piece.

6. The disaster tolerance method according to any one of claims 1 to 5, further comprising:
stopping, in response to detecting that a second preset event occurs, generating the first synchronization policy according to the disaster tolerance parameters;
wherein the second preset event comprises at least one of:
upgrade of version of the middleware type;
maintenance and upgrade of the first site; or
maintenance and upgrade of the second site.

7. The disaster tolerance method according to any one of claims 1 to 5, further comprising:
after synchronizing, according to the first synchronization policy, the data of the entity objects of the middleware type of the first site to the entity objects of the middleware type of the second site, switching roles of the first site and the second site so that the first site becomes a second standby site, and the second site becomes a second primary site, and stopping data synchronization according to the first synchronization policy; clearing unsynchronized data cache of the entity objects of the middleware type of the first primary site; and
generating a third synchronization policy according to the disaster tolerance parameters; and synchronizing, according to the third synchronization policy, the data of the entity objects of the middleware type of the second primary site to the entity objects of the middleware type of the second standby site.

8. The disaster tolerance method according to claim 5, further comprising:
after synchronizing, according to the first synchronization policy, the data of the entity objects of the middleware type of the first site to the entity objects of the middleware type of the second site, displaying the disaster tolerance parameters of each middleware entity object; and displaying a relevant state of the entity object of the middleware type during operating of the entity object, and displaying the connection state of the link between the first site and the second site.

9. A disaster tolerance apparatus for middleware of platform as a service (PaaS), comprising: an access module, a configuration module, a control module, and a synchronization execution module; wherein
the access module is configured to determine a first site as a first primary site, and connect the first site to a second site in response to detecting that a middleware type of the first site and a number of entity objects of the middleware type of the first site are consistent with a middleware type of the second site and a number of entity objects of the middleware type of the second site, and versions of the middleware type of the first site and the middleware of the second site are compatible or consistent with each other, wherein the second site is a standby site;
the configuration module is configured to configure disaster tolerance parameters for the entity objects of at least one middleware type of the first site and the second site, respectively; wherein the disaster tolerance parameters comprise a priority of quality of service (QoS) and a communication address;
the control module is configured to generate a first synchronization policy according to the disaster tolerance parameters; and
the synchronization execution module is configured to synchronize, according to the first synchronization policy, data of the entity objects of the middleware type of the first site to the entity objects of the middleware type of the second site.

10. The disaster tolerance apparatus according to claim 9, further comprising:
a collection module configured to collect a relevant state of the entity objects of each middleware type during operating of the entity objects; wherein the relevant state comprises: at least one of a hardware operating state desired for operation of the middleware type or an operating state of the middleware type itself; wherein
the control module is further configured to receive the relevant state and generate the first synchronization policy according to the disaster tolerance parameters and the relevant state; wherein the first synchronization policy comprises: adjusting, according to the relevant state, a priority for data synchronization of the entity object of the middleware type.

11. The disaster tolerance apparatus according to claim 9, wherein:
the collection module is further configured to collect, during the synchronization execution module synchronizing the data of the entity objects of the middleware type of the first site to the entity objects of the middleware type of the second site according to the first synchronization policy, a synchronization state of the data in synchronization;
the control module is further configured to adjust, in response to that a first preset event occurs in the synchronization state, the first synchronization policy to a second synchronization policy; and
the synchronization execution module is further configured to synchronize, through the second synchronization policy, the data of the entity objects of the middleware type of the first site to the entity objects of the middleware type of the second site.

12. A disaster tolerance device, comprising a processor, a memory and a communication bus; wherein
the communication bus is configured to enable communication connection between the processor and the memory; and
the processor is configured to execute one or more computer programs stored in the memory to implement the disaster tolerance method for middleware of PaaS in any one of claims 1 to 8.

13. A computer-readable storage medium storing one or more computer programs thereon, wherein the one or more computer programs, when executed by one or more processors, cause the one or more processors to implement the disaster tolerance method for middleware of PaaS in any one of claims 1 to 8.
